# EUROPÄISCHE PATENTSCHRIFT

(11) **EP 2 328 714 B1**
(45) Veröffentlichungstag und Bekanntmachung des Hinweises auf die Patenterteilung: **07.09.2016**
(21) Anmeldenummer: 09780996.6
(22) Anmeldetag: 23.07.2009
(51) Int. Cl.: B23K 37/02, B25J 17/02

(54) **NUMERISCH GESTEUERTE WERKZEUGHALTEVORRICHTUNG ZUR STRAHLBEARBEITUNG**
NUMERICALLY CONTROLLED TOOL HOLDER FOR BEAM WORKING
PORTE-OUTILS A CONTROLE NUMERIQUE POUR LE TRAVAIL PAR FAISCEAU D'ENERGIE

(30) Priorität: 13.08.2008 DE 102008038103
(43) Veröffentlichungstag der Anmeldung: 08.06.2011
(73) Patentinhaber: ESAB Welding & Cutting GmbH, 61184 Karben (DE)
(72) Erfinder: CANSIZ, Tamer, 61194 Niddatal-Bönstadt (DE)
(74) Vertreter: Gulde & Partner
(86) Internationale Anmeldenummer: PCT/EP2009/059515
(87) Internationale Veröffentlichungsnummer: WO 2010/018052

(56) Entgegenhaltungen:
- WO-A1-85/00549
- WO-A1-91/03732
- GB-A- 2 160 845
- GB-A- 2 254 172

## Beschreibung

Die Erfindung betrifft eine numerisch gesteuerte Werkzeughaltevorrichtung zur Strahlbearbeitung, wie aus der GB-A-2 254 172 bekannt.

Sie ist eine speziell auf die Belange der Strahlbearbeitung dicker, plattenförmiger Bauteile zugeschnittene Vorrichtung und dabei als Komponente einer portalartigen, roboterähnlichen Maschine zu verstehen. Mit ihrer Hilfe ist es möglich, das strahlerzeugende Werkzeug in seiner Orientierung relativ zum Bauteil zu ändern und die in diesem Blechdickenbereich üblichen Fasenformen - typisch sind sehr flache Fasen mit großer Länge - ohne die Gefahr von Kollisionen und mit besonders großer Genauigkeit herzustellen. Die Vorrichtung ist dafür konzipiert, den bei der Strahlbearbeitung dicker, plattenförmiger Teile vorherrschenden Umweltbelastungen, nämlich großer Hitze und starker Staubentwicklung, zu widerstehen.

Vorrichtungen zum Verschwenken eines Werkzeuges an einem Industrieroboter oder einer roboterähnlichen Maschine werden Roboterhandgelenk genannt. An fünfachsigen Fräsmaschinen sind ähnliche Einrichtungen im Einsatz und sie werden dort als Schwenkkopf bezeichnet.

Normalerweise besteht ein Roboterhandgelenk aus drei Bewegungsachsen. Beim Schneiden sind - auf Grund der Rotationssymmetrie des Werkzeuges - wie auch beim Fräsen- zwei Bewegungsachsen ausreichend.

Roboterhandgelenke sind seit vielen Jahren und in unterschiedlichster kinematischer und konstruktiver Gestaltung bekannt (Hesse, St.: Industrieroboterpraxis. Vieweg-Verlag Braunschweig, Wiesbaden, 1998), (Rosheim, M.E.: Robot Wrist Actuator. John Wiley & Sons, New York, 1989). In aller Regel sind diese Handgelenke nicht für eine spezielle technologische Aufgabe konzipiert, sondern sie sind universelle Einrichtungen, die sich auf verschiedene Applikationen adaptieren lassen, damit allerdings die speziellen Anforderungen eines technologischen Verfahrens im Gegenzug unter Umständen nur unvollständig erfüllen.

Ein Handgelenk zum Schneiden ist in DE 10 2005 041 462 beschrieben. Mit Hilfe einer größeren Zahl von Getriebegliedern wird eine Kreisschwenkung des Abtriebsgliedes, also z.B. des Schneidbrenners, bei gleichzeitig vergleichsweise hoher Steifigkeit erreicht. Im Kreismittelpunkt der Kreisschwenkung ist der TCP (Tool Center Point = Werkzeugmittelpunkt = Brennerspitze) des Brenners angeordnet. Gleichzeitig verläuft durch diesen Punkt die senkrechte Achse einer zweiten Bewegungseinheit und der Brenner kann so uneingeschränkt um diesen Punkt rotieren. Eine Vielzahl von Maschinenelementen befindet sich in nächster Nähe der Brennerspitze und in nur geringer Entfernung vom zu schneidenden Bauteil. Um deren thermische Belastung zu begrenzen kann das Handgelenk nur für Plasma- und Autogenbrenner kleinerer Leistung und demzufolge nur für kleinere Schnittdicken verwendet werden. Der Kollisionsraum des Handgelenks in Brennernähe ist - besonders auf Grund eines dort als Tragekoppel bezeichneten Bauteils - groß, weswegen das Schneiden flacher Fasen mit Fasenwinkeln deutlich über 45 Grad nicht möglich ist.

Eine vergleichbare Lösung - basierend auf einem Parallelkurbelgetriebe - beschreibt DE 9416957 zur Anwendung als Instrumentenführungs- und Haltevorrichtung in der Medizintechnik. Der Mittelpunkt der Kreisschwenkung wird in dieser Lösung als invarianter Punkt bezeichnet.

In US 5286006 wird eine Fasenschneideinrichtung mit zwei Brennern beschrieben, bei dem zumindest ein Brenner mit einem Gelenkmechanismus um eine Achse entlang der Bahntangente verschwenkbar und darüber hinaus in Normalenrichtung verschiebbar ist, um "dachförmige" Schnittflanken herzustellen. Die Gestaltung des Schwenkmechanismus bedingt, ähnlich wie bei den schon beschriebenen technischen Lösungen, einen großen Kollisionsraum und eine Vielzahl von Maschinenelementen in großer Nähe zum TCP.

In JP 02229670 ist ein Verfahren zum Fasenschneiden und eine dazugehörige Vorrichtung beschrieben. Der Brenner wird zum Schwenken auf einer Bogenführung bewegt. Diese vergrößert den Kollisionsraum erheblich und lässt es prinzipiell nicht zu, dass der Brenner einen Bewegungsbereich von mehr als etwa 150 Grad besitzen kann. Die Sensierung der Bauteillage geschieht an der vorher geschnittenen, geraden Flanke mit einem waagerecht wirkenden Abstandssensor. TCP und Sensor sind in Schneidrichtung nacheinander angeordnet. Damit ist diese Lösung für das Herstellen von Fasenschnitten an geraden Bauteilkanten gut, für die Herstellung von Konturschnitten jedoch ungeeignet.

Eine weitere ähnliche technische Lösung beschreibt US 6201207. Eine Anordnung von zwei numerisch gesteuerten Achsen ist hier so vorgenommen, dass durch Nacheinanderanordnung zweier ebener Parallelkurbelgetriebe die Brennerschwenkung um einen festen, an der Brennerspitze liegenden Punkt geschieht. Eine schonende Behandlung der zum Brenner führenden Kabel und Schläuche wird hier möglich. Jedoch erfordert diese Lösung eine extrem große Zahl von Gelenken und Getriebegliedern, was den Fertigungsaufwand und die -kosten ebenso wie die negativen Wirkungen von Getriebespiel und Fertigungstoleranz steigert. Alle Glieder und Gelenke müssen naturgemäß in großer räumlicher Nähe zum Brenner angeordnet werden und sie sind hohen thermischen Belastungen einerseits, Staub und Spritzern andererseits ausgesetzt. Letztendlich erhöht die große Nähe der Mechanismen zum zu schneidenden Bauteil auch die Kollisionsgefahr.

Um Gelenkarm-Industrieroboter auch bei schwierigen Umweltbedingungen (Staub, Hitze, Feuchtigkeit) einsetzen zu können wurden Standardroboter zu Spezialausführungen weiterentwickelt (KUKA-Roboter für die Gießerei- und Schmiede-Industrie. Firmenschrift KUKA Roboter GmbH, Hery-Park 3000, 86368 Gersthofen, 2005), indem die distalen Komponenten, d.h. wesentlich das Roboterhandgelenk, modifiziert sind. Dies betrifft staub- und druckwasserfeste Dichtungen, verstärkte Gehäuse und hitzebeständige und Wärmestrahlung reflektierende Beschichtungen. Die Adaption eines Schneidbrenners an derartige Roboter und deren Einsatz zum Starkbrennschneiden ist möglich und wird zum Teil auch praktiziert. Zum Schutz des Handgelenkes und zum Schneiden auch flacher Fasen muss der Abstand von Brennerspitze zum Handgelenk vergleichsweise groß genommen werden. Das verringert den Roboterarbeitsraum dramatisch, weswegen auch Roboter mit großem Arbeitsraum nur für sehr kleine Bauteilabmessungen geeignet sind. Durch den vergleichsweise hohen Abstand des TCP vom Schnittpunkt der Drehachsen des Handgelenkes wird die Positioniergenauigkeit des Roboters verringert, es machen sich Toleranzen bei der Referenzierung des Roboters in der Position des TCP bemerkbar, die unter Umständen unvertretbar hoch werden können.

In DE 69210201 ist eine Lösung für das Kühlen eines Werkzeuges, bei gleichzeitigem Absaugen des zerspanten Materials, beschrieben. Die Kühlung ist zweigeteilt. Eine geschlossene Gehäuseinnenseite ist mit einem Ölein- und Ölauslass versehen, um in einem geschlossenen Kühlkreislauf die Antriebsorgane, in diesem Falle schnell laufende Spindeln, zu kühlen. Gelochte Trennwände bilden ein Labyrinth und sie sollen dadurch die Kühlung gleichmäßig gestalten. Ein zweiter Kühlkreislauf ist für eine Luftkühlung der von den Spindeln angetriebenen Werkzeuge vorgesehen, indem ein Verteilerkreis im Gehäuse die über einen Anschluss zugeführte Luft gleichmäßig auf die Werkzeuge außerhalb des Gehäuses verteilt. Eine Entspannung der Medien innerhalb des Gehäuses findet nicht statt; die Kühlung erfolgt nur durch die Wärmekapazität des Öls einerseits und der Luft andererseits.

Gemäß dem beispielhaft zitierten Stand der Technik sind keine für das Strahlschneiden, insbesondere das Brennschneiden von Platten großer Dicke, mit portalartigen, roboterähnlichen Maschinen, unter den entsprechenden Randbedingungen bezüglich Staub und Hitze, geeigneten Lösungen nachweisbar.

Aufgabe der Erfindung ist es daher, eine Werkzeughaltevorrichtung zu schaffen, die auf die Belange der Strahlbearbeitung sehr dicker Bauteile zugeschnitten ist, wobei die Werkzeughaltevorrichtung so ausgebildet und dimensioniert sein soll, dass sie die beim Brennschneiden von unüblich dicken Bauteilen (>100mm) auftretende Hitzeentwicklung- als Folge des Schneidens einerseits und als Folge des Bauteilvorwärmens andererseits- ertragen kann und es soll die Werkzeughaltevorrichtung des weiteren in der Lage sein, an plattenförmigen Bauteilen extrem große Fasenwinkel (>60 Grad) kollisionsfrei herzustellen, dabei sollen das in die Werkzeughaltevorrichtung eingebaute strahlerzeugende Werkzeug als auch die Werkzeughaltevorrichtung selbst umfassend und komplett vor der Beschädigung bei Kollisionen geschützt sein.

Durch geeignete technische Lösungen soll gewährleistet sein, dass das im Antriebsstrang der Werkzeughaltevorrichtung auftretende Getriebespiel keine Auswirkungen auf die Positioniergenauigkeit am TCP des Werkzeuges hat.

Eine Referenzierung, d.h. das Finden des Bewegungsbereich-Nullpunktes der Werkzeughaltevorrichtung nach dem Einschalten der Maschine soll so vonstatten gehen, dass auch bei einer sehr großen Wirklänge des Werkzeuges (Abstand zwischen Schwenkachse und Unterkante der Schnittfuge) eine hohe Positioniergenauigkeit an der Unterkante der Schnittfuge erreichbar ist.

Erfindungsgemäß wird die Aufgabe wie folgt gelöst, wobei hinsichtlich der grundlegenden erfinderischen Gedanken auf den Patentanspruch 1 verwiesen wird.

Die weitere Ausgestaltung der Erfindung ergibt sich aus den Patentansprüchen 2 bis 7.

Folgende ergänzende Hinweise zur erfinderischen Lehre sind erforderlich.

Die erfindungsgemäße Werkzeughaltevorrichtung befindet sich an einer Maschine zur Strahlbearbeitung mit portalartigem, roboterähnlichem Charakter, auf welcher plattenförmige Bauteile großer Dicke zu bearbeiten sind. Dabei befindet sich ein Autogenbrenner als strahlerzeugendes Werkzeug in der Regel sehr dicht am Bauteil. Es muss dabei Sorge getragen werden, dass die Beweglichkeit des Autogenbrenners die strahlschneidtechnologischen Forderungen bei gleichzeitig höchster Positioniergenauigkeit erfüllt und gegebenenfalls entstehende Kollisionen von ihm mit dem zu bearbeitenden Bauteil oder peripheren Einrichtungen ohne gravierende Folgen für die Werkzeughaltevorrichtung sind.

Eine derartige Werkzeughaltevorrichtung ist wie folgt aufgebaut:
Eine Dreheinrichtung trägt über ein gekröpftes Verbindungsglied eine Schwenkeinrichtung, die wiederum seitlich und in ihrer gedachten Schwenkachse mittels eines das Werkzeug tragenden Elementes einen um mehr als 180° schwenkbaren Brenner, das strahlerzeugende Werkzeug, aufnimmt. Dabei weist die genannte Schwenkachse zu einer waagerechten Ebene einen Winkel von höchsten 30° auf.

Die Schwenkeinrichtung ist ihrerseits um 360° um eine Achse, die an der Unterseite der Dreheinrichtung austritt, drehbar ausgebildet. Die Dreheinrichtung wiederum ist am distalen Ende einer Führungsmaschine, z.B. eines Portalroboters, angeordnet. Die Schwenkeinrichtung beinhaltet ein komplettes Antriebs- und Messsystem, ein Untersetzungsgetriebe (Schwenkgetriebe) sowie auf dessen An- und Abtriebswelle Schaltfahnen, die in Wirkverbindung zu Schaltmitteln zur Referenzierung, d.h. dem Finden der Nullstellung der Werkzeughaltevorrichtung stehen, wobei das Messsystem inkremental arbeitet und über das Schwenkgetriebe die Stellung des das ein strahlerzeugendes Werkzeug tragenden Elementes steuert.

Zur Kompensation von Gelenkspiel im Antriebsstrang zwischen Schwenkmotor und dem strahlerzeugenden Werkzeug befindet sich auf der Schwenkachse innerhalb des Gehäuses der Schwenkeinrichtung kurz vor deren Ausgang in Richtung des Werkzeug tragenden Elementes eine mechanische Einrichtung, die ein konstantes Drehmoment erzeugt. Letzteres ist größer als jenes, das durch technologische Kräfte und Massenkräfte des strahlerzeugenden Werkzeuges hervorgerufen wird.

Das das strahlerzeugende Werkzeug tragende Element ist als Kollisionsschutzeinrichtung ausgebildet, indem durch Federn oder Permanentmagneten verschlossene Passverbindungen bei äußeren Kräften, die die Haltekraft überschreiten, öffnen und ein elektrisches Schaltelement auslösen, das die Maschine stillsetzt.

Ein weiterer Schutzmechanismus ist dadurch gegeben, dass die Schwenkeinrichtung durch eine korbförmige Schutzeinrichtung umfasst ist, die einen definierten Abstand zur Oberfläche des allseitig geschlossenen Gehäuses der Schwenkeinrichtung besitzt. Bei Berührung dieses korbes" verschieben sich eine oder mehrere Verschlussfahnen, die Schaltzapfen niederhalten, so dass per Energieunterbrechung ein Not-Aus erreicht wird.

Das strahlerzeugende Werkzeug kann selbst - neben einer bevorzugt geraden Ausführung - auch eine gekröpfte Ausbildung aufweisen.

Das Gehäuse der Schwenkeinrichtung besteht insbesondere aus metallischem Material, welches die starke Hitze am Arbeitsort reflektiert und Spritzer, z.B. beim Brennschneiden, abweist. Die Schwenkeinrichtung wird in geeigneter Weise durch ein Gas , insbesondere Luft, gekühlt.

Die Erfindung soll nachfolgend an einem Ausführungsbeispiel näher erläutert werden.

Dabei zeigen:

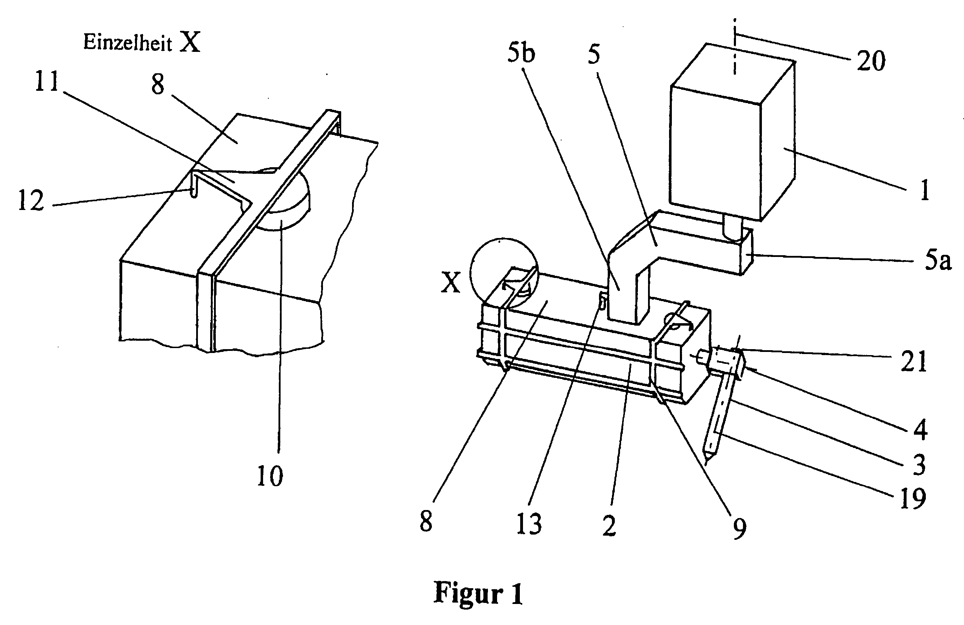

- Figur 1:: Eine perspektivische Gesamtansicht der Werkzeughaltevorrichtung,

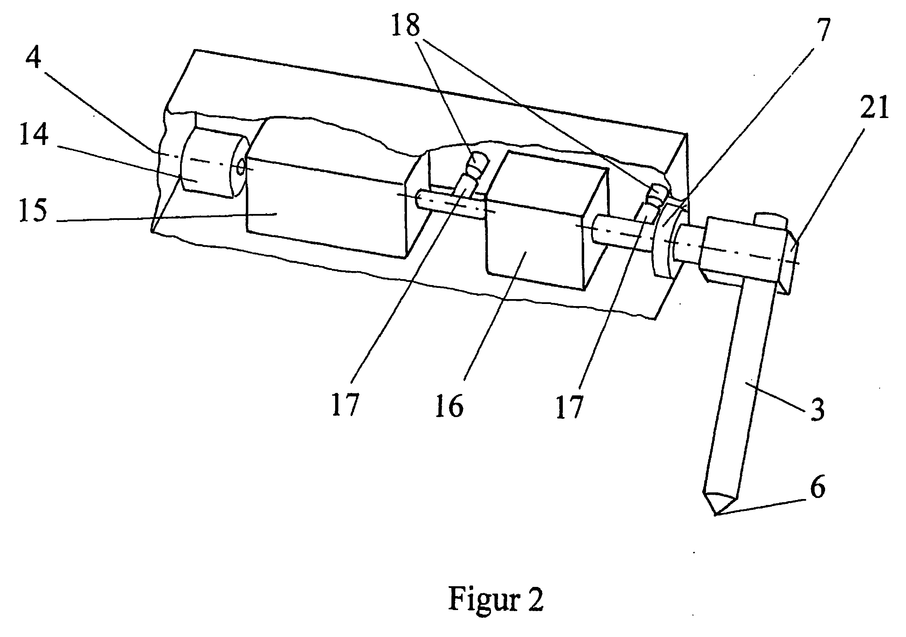

- Figur 2:: Eine Schnittdarstellung des Gehäuses der Werkzeughaltevorrichtung,

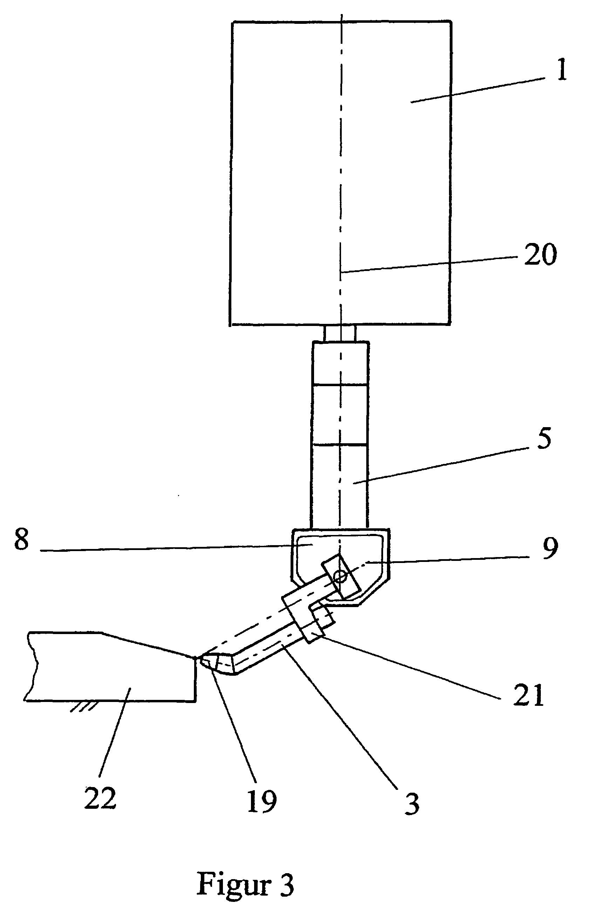

- Figur 3:: Eine Ansicht der Werkzeughaltevorrichtung beim Schneiden einer flachen Fase mit einem gekröpften Brenner

Einzelheit "X": Ein Detail der korbförmigen Schutzeinrichtung.

Die Werkzeughaltevorrichtung ist für die Strahlbearbeitung - z.B. das Brennschneiden - sehr dickwandiger, plattenförmiger Bauteile vorgesehen. Neben Konturschnitten sind hier besonders Fasenschnitte, mit oft extrem großem Fasenwinkel, herstellbar.

Eine Dreheinrichtung 1, lotrecht angeordnet und in proximaler Richtung mit einer kartesisch wirkenden Führungsmaschine, z.B. einem Portalroboter verbunden, ist über ein gekröpftes Verbindungsglied 5 an einer Schwenkeinrichtung 2 angebracht, deren Schwenkachse 4 in einer waagerechten Ebene liegt oder mit dieser einen nur kleinen Winkel einschließt. Zumindest annähernd fluchtend zur Achse der Dreheinrichtung 1 ist auf der Schwenkachse 4 der Schwenkeinrichtung 2 mit einem Brennerhalter 21 ein strahlerzeugendes Werkzeug 3 befestigt. Die Achse 19 des strahlerzeugenden Werkzeugs 3 liegt in Grundstellung parallel zur Achse der Dreheinrichtung 1. In einem Gehäuse 8 sind alle zum numerischen Betrieb der Dreheinrichtung 1 erforderlichen mechanischen und messtechnischen Komponenten eingebaut, wobei ein Schwenkmotor 15 mit einem inkremental wirkenden Messsystem 14 auf ein Schwenkgetriebe 16 wirkt, was seinerseits mit dem Brennerhalter 21 und gleichfalls mit einer mechanischen, ein Drehmoment erzeugenden mechanischen Einrichtung 7 fest verbunden ist. Sie kann als pneumatischer Drehflügelmotor ausgebildet sein oder im Sinne einer Torsions- bzw. Spiralfeder wirken. Die mechanische Einrichtung 7 erzeugt zwischen dem Gestell der Schwenkeinrichtung 2 und der Abtriebswelle des Schwenkgetriebes 16 ein annähernd konstantes, in eine Richtung wirkendes Drehmoment, das in jedem Fall größer ist als jenes, das das strahlerzeugende Werkzeug 3 und eventuell aus seinem Betrieb entstehende technologische Kräfte über den Brennerhalter 21 auf die Abtriebswelle des Schwenkgetriebes 16 leitet.

Zur Steigerung einer Genauigkeit der Referenzierung der Schwenkeinrichtung 2 beim In-Betrieb-Nehmen sind je eine Schaltfahne 17 auf der An- und der Abtriebswelle des Schwenkgetriebes 16 angeordnet, die auf je ein Schaltmittel 18, z.B. einen mechanisch wirkenden Taster oder einen Näherungsinitiator, wirken. Beide Schaltmittel 18 funktionieren als Öffner, d.h. bei Betätigung durch die Schaltfahnen 17 wird ein Stromfluss unterbrochen, wobei sie zum Finden der Referenzposition der Schwenkeinrichtung 2 parallel geschalten sind.

Zum Schutz vor den bei einer Strahlbearbeitung, z.B. beim Brennschneiden, naturgemäß entstehenden großen Staubmengen und Schlackespritzem ist das Gehäuse 8 komplett geschlossen und an den Seitenflächen und der Unterseite aus einem Wärmestrahlung reflektierenden und mit Schlackespritzern keine Verbindung eingehenden Werkstoff hergestellt. An der Oberseite des Gehäuses 8 befindet sich ein Zuflussrohr 13 für ein gasförmiges Kühlmittel, bevorzugt Luft, das mit großem Druck eingeblasen, durch Kanäle im Gehäuse 8 geleitet wird, sich entspannt, an der Oberseite des Gehäuses 8 drucklos austritt und durch seine Wärmekapazität einerseits und durch die Wirkung der Entspannungskälte andererseits für eine Kühlung des Gehäuses 8 und aller im Gehäuse 8 befindlichen Komponenten sorgt. Das Gehäuse 8 selbst ist so ausgeformt, dass die vom TCP 6 beim Schwenken um die Schwenkachse 4 generierte Mantelfläche dieses komplett umschließt. Der vorwiegend waagerechte Teil des gekröpften Verbindungsgliedes 5a wiederum hat einen minimalen Abstand von der Schwenkachse 4, der größer ist als der Abstand des TCP 6 von der Schwenkachse 4.

Zum Schutz der Schwenkvorrichtung 2 vor Kollisionen ist einerseits der Brennerhalter 21 als Kollisionsschutz ausgebildet dergestalt, dass sich bei einer Kollision des strahlerzeugenden Werkzeuges 3 eine permanentmagnetische oder eine federvorgespannte Passverbindung öffnet und ein Schaltglied betätigt wird und andererseits das Gehäuse 8 an allen seinen Außenseiten, mit Ausnahme der Deckfläche und jener Stirnfläche, an der sich der Brennerhalter 21 befindet, von einer korbförmigen Schutzeinrichtung 9 umschlossen ist Zum Gehäuse 8 hat die korbförmige Schutzeinrichtung 9 einen lichten Abstand, der größer ist als der Bremsweg bei einer Gefahrenbremsung der Maschine. Die korbförmige Schutzeinrichtung 9 ist mit zumindest einem Permanentmagnet 10 an der Oberseite des Gehäuses 8 befestigt. Dort sind zwei, an den gegenüberliegenden Gehäuseseiten befindliche Schaltzapfen 12 angeordnet, die - federvorgespannt - aus dem Gehäuse 8 heraus ragen und die ihrerseits elektrische Schaltelemente betätigen. Vermittels zweier an der korbförmigen Schutzeinrichtung 9 befindlichen, spitz zulaufenden Verschlussfahnen 11 werden die Schaltzapfen 12 in das Gehäuse 8 gedrückt und die elektrischen Schaltelemente geschlossen. Im Kollisionsfall wird die permanentmagnetisch gehaltene, korbförmige Schutzeinrichtung 9 auf dem Gehäuse 8 verschoben, unter Umständen gar abgerissen und die spitz zulaufende Verschlussfahne 11 verliert die Verbindung zu dem Schaltzapfen 12, der sich dadurch nach außen schiebt und somit das elektrische Schaltelement nicht länger geschlossen halten kann, so dass die Maschine durch ein Not-Aus-Signal stillgesetzt wird.

### Bezugszeichenliste

- 1-: Dreheinrichtung
- 2-: Schwenkeinrichtung
- 3-: Strahlerzeugendes Werkzeug
- 4-: Schwenkachse
- 5-: Gekröpftes Verbindungsglied
- 5a-: vorwiegend waagerechter Teil des gekröpften Verbindungsgliedes
- 5b-: vorwiegend senkrechter Teil des gekröpften Verbindungsgliedes
- 6-: Tool Center Point (TCP)
- 7-: Mechanische Einrichtung zur Erzeugung eines Drehmomentes
- 8-: Gehäuse
- 9-: Korbförmige Schutzeinrichtung
- 10-: Permanentmagnet
- 11-: Spitz zulaufende Verschlussfahne
- 12-: Schaltzapfen
- 13-: Zuflussrohr
- 14-: Inkremental wirkendes Messsystem
- 15-: Schwenkmotor
- 16-: Schwenkgetriebe
- 17-: Schaltfahne
- 18-: Schaltmittel
- 19-: Brennerachse
- 20-: Achse der Dreheinrichtung
- 21-: Brennerhalter
- 22-: Werkstück

## Patentansprüche

1. Numerisch gesteuerte Werkzeughaltevorrichtung zur Strahlbearbeitung mittels Brennschneidens, befestigt an einer lotrecht angeordneten, numerisch gesteuerten und um mindestens 360 Grad eine Drehung auslösenden Dreheinrichtung (1) und mit Hilfe eines Brennerhalters (21) ein strahlerzeugendes Werkzeug (3) tragend, das in der Mittelstellung seines Bewegungsbereiches mit seiner Brennerachse (19) parallel bzw. annähernd in der Flucht zur Achse (20) der Dreheinrichtung (1) liegt, mit einer Schwenkeinrichtung (2), deren Schwenkachse (4) zu einer waagerechten Ebene einen Winkel von höchstens 30 Grad einnimmt, einem Gehäuse (8), das um die Schwenkachse (4) herum und in dessen Hauptausdehnung entlang der Schwenkachse (4) verläuft und einem gekröpften Verbindungsglied (5), bestehend aus einem vorwiegend senkrechten (5b) und einem vorwiegend waagerechten Teil (5a), die starr miteinander verbunden sind, positioniert zwischen der Schwenkeinrichtung (2) und der Dreheinrichtung (1), und, dass eine Brennerspitze bzw. ein TCP (6) des strahlerzeugenden Werkzeugs (3) zur Schwenkachse (4) einen Normalabstand besitzt, der größer ist als die Ausdehnung des Gehäuses (8) in einer Ebene lotrecht zur Schwenkachse (4), **gekennzeichnet dadurch, dass** der waagerechte Teil des Verbindungsgliedes (5a) vom gekröpften Verbindungsglied (5) so ausgeführt ist, dass dessen Abstand zur Schwenkachse (4) größer ist als jener zwischen TCP (6) und der Schwenkachse (4) sowie der Bewegungsbereich des strahlerzeugenden Werkzeugs (3) um die Schwenkachse (4) mehr als 180 Grad beträgt, wobei auf der Welle der Schwenkachse (4) und mit dem Brennerhalter (21) eine fest verbundene mechanische, ein Drehmoment erzeugende Einrichtung (7) vorhanden ist, die ein annähernd konstantes und in eine Richtung wirkendes Drehmoment auf die Welle der Schwenkachse (4) bewirkt, das betragsmäßig größer ist als jenes, welches durch etwaige technologische Kräfte bzw. Massenkräfte vom strahlerzeugenden Werkzeug (3) auf diese Welle zurückführbar ist sowie das Gehäuse (8) von einer korbförmigen Schutzeinrichtung (9) umschlossen ist, die zum Gehäuse (8) an der Unterseite und an den Seitenwänden einen Abstand besitzt, der größer ist als der Not-Aus-Bremsweg der portalartigen, roboterähnlichen Maschine, die korbförmige Schutzeinrichtung (9) an der Gehäuseoberseite mit zumindest einem Permanentmagneten (10) mit dem Gehäuse (8) verbunden ist und mit spitz zulaufenden Verschlussfahnen (11) zumindest einen aus dem Gehäuse (8) heraus ragenden Schaltzapfen (12) gedrückt hält, der seinerseits eine im Not-Aus-Kreis eingefügte Schalteinrichtung schließt.

2. Numerisch gesteuerte Werkzeughaltevorrichtung nach Anspruch 2, **gekennzeichnet dadurch, dass** die mechanische, ein Drehmoment erzeugende Einrichtung (7) als ein pneumatischer Drehflügelmotor oder als eine Torsions- oder Spiralfeder ausgeführt ist.

3. Numerisch gesteuerte Werkzeughaltevorrichtung nach Anspruch 1, **gekennzeichnet dadurch, dass** das Gehäuse (8) und das gekröpfte Verbindungsglied (5) alle zum numerischen Betrieb der Schwenkeinrichtung (2) erforderlichen Komponenten umschließen und die Unterseite und die Seitenwände des Gehäuses (8) aus einem Werkstoff bestehen, der heiße Schlackespritzer nicht anhaften lässt und eine die Wärmestrahlung stark reflektierende Oberfläche besitzt.

4. Numerisch gesteuerte Werkzeughaltevorrichtung nach Anspruch 1, **gekennzeichnet dadurch, dass** das Gehäuse (8) selbst und die in ihm befindlichen Komponenten durch ein Gas gekühlt werden, indem dieses mit hohem Druck in das Gehäuse (8) über ein Zuflussrohr (13) leitbar sowie entlang einer definierten Bahn führbar ist.

5. Numerisch gesteuerte Werkzeughaltevorrichtung nach Anspruch 1 mit einem inkremental wirkenden Messsystem (14) im Innern des Gehäuses (8), **gekennzeichnet dadurch, dass** das Messsystem (14) auf die Welle eines Schwenkmotors (15) geflanscht und zu dessen Referenzierung jeweils eine Schaltfahne (17) auf der An- und der Abtriebswelle eines Schwenkgetriebes (16) befestigt ist, die Schaltfahnen (17) jeweils auf ein als Öffner arbeitendes Schaltmittel (18) wirken, wobei letztere parallel geschalten sind.

6. Numerisch gesteuerte Werkzeughaltevorrichtung nach Anspruch 1, **gekennzeichnet dadurch, dass** zur Referenzierung der Dreheinrichtung (1) jeweils eine Schaltfahne auf der An- und der Abtriebswelle ihres Untersetzungsgetriebes befestigt ist, diese jeweils auf ein als Öffner arbeitendes Schaltmittel wirken und die beiden Schaltmittel parallel geschalten sind.

7. Numerisch gesteuerte Werkzeughaltevorrichtung nach Anspruch 1, **gekennzeichnet dadurch, dass** das strahlerzeugende Werkzeug (3) gekröpft ist, derart, dass der ungekröpfte Teil des strahlerzeugenden Werkzeuges (3) in Grundstellung parallel zur Achse der Dreheinrichtung (1) liegt und die in den TCP (6) des strahlerzeugenden Werkzeuges (3) verschobene Achse seines gekröpften Teiles sich mit der Schwenkachse (4) schneidet.

## Claims

1. Digitally controlled tool holding device for blast cleaning by means of flame cutting fixed to a vertically arranged, digitally controlled rotation device (1) that can actuate a rotation of at least 360°, and with the aid of a burner holder (21) carrying a blast generating tool (3), which in the middle position of its movement range lies with its burner axis (19) parallel or approximately in alignment with the axis (20) of the rotation device (1), with a swivel device (2) whose swivel axis (4) adopts an angle of at most 30° to a horizontal plane, a housing (8) that surrounds the swivel axis (4) and in its main extension runs along the swivel axis (4), and an offset connection member (5) consisting of a mainly perpendicular part (5b) and a mainly horizontal part (5a), which are rigidly connected to one another, positioned between the swivel device (2) and the rotation device (1), and that a burner tip or a TCP (6) of the blast generating tool (3) has a normal distance to the swivel axis (4) that is greater than the extension of the housing (8) in a plane perpendicular to the swivel axis (4), **characterised in that** the horizontal part of the connection member (5a) is formed from the offset connection member (5) so that its distance to the swivel axis (4) is greater than that between the TCP (6) and the swivel axis (4) and also the movement range of the blast generating tool (3) about the swivel axis (4) is more than 180°, wherein a firmly connected mechanical device (7) generating a torque is present on the shaft of the swivel axis (4) and with the burner holder (21), which produces a torque on the shaft of the swivel axis (4) that is approximately constant and acts in one direction, which torque is greater than that that can be attributed to any technical forces or mass forces from the blast generating tool (3) on this shaft, and also the housing (8) is enclosed by a basked-shaped protective device (9), which has a distance to the housing (8) on the underneath and on the side walls that is greater than the emergency stop braking distance of the gantry-shaped, robot-like machine, the basket-shaped protective device (9) on the upper side of the housing is connected to the housing (8) by at least one permanent magnet (10) and with sharply tapering closing lugs (11) holds compressed at least one switching pin (12) projecting from the housing (8), which in turn closes a switching device contained in the emergency stop circuit.

2. Digitally controlled tool holder according to claim 2 (sic), **characterised in that** the mechanical device (7) generating a torque is implemented as a pneumatic rotary motor or as a torsion or spiral spring.

3. Digitally controlled tool holder according to claim 1, **characterised in that** the housing (8) and the offset connection member (5) enclose all components necessary for the digital operation of the swivel device (2), and the underneath and the side walls of the housing (8) consist of a material to which hot slag spray cannot adhere and have a surface that strongly reflects the thermal radiation.

4. Digitally controlled tool holder according to claim according to claim 1, **characterised in that** the housing (8) itself and the components contained therein are cooled by a gas, wherein this gas can be fed at high pressure into the housing (8) via a feed pipe (13) or can be guided along a defined path.

5. Digitally controlled tool holder according to claim 1, with an incrementally acting measurement system (14) in the interior of the housing (8), **characterised in that** the measurement system (14) is flanged to the shaft of a swivel motor (15) and for reference purposes in each case a switching pin (17) is fixed to the drive shaft and the take-off shaft of a swivel gear system (16), the swivel pins (17) in each case act on a switching means (18) operating as an opener, the latter being switched in parallel.

6. Digitally controlled tool holder according to claim 1, **characterised in that** for purposes of reference of the rotation device (1) in each case a switching pin is fixed to the drive shaft and to the take-off shaft of its reduction gear, and these act respectively on a switching means acting as an opener, and the two switching means are switched in parallel.

7. Digitally controlled tool holder according to claim 1, **characterised in that** the blast generating tool (3) is offset in such a way that the non-offset part of the blast generating tool (3) in the normal position lies parallel to the axis of the rotation device (1) and the axis of its offset part displaced in the TCP (6) of the blast generating tool (3) intersects the swivel axis (4).

## Revendications

1. Dispositif porte-outil à commande numérique pour le traitement par faisceau au moyen d'une découpe au chalumeau, fixé sur un dispositif rotatif à commande numérique (1) aménagé verticalement effectuant une rotation d'au moins 360 degrés et portant un outil générateur de faisceau (3) à l'aide d'un support de brûleur (21), qui se situe dans la position moyenne de sa plage de mouvement avec son axe de brûleur (19) parallèle ou à peu près dans l'alignement avec l'axe (20) du dispositif rotatif (1), comprenant un dispositif pivotant (2), dont l'axe de pivotement (4) fait avec un plan horizontal un angle au maximum de 30 degrés, un boîtier (8), qui s'étend autour de l'axe pivotant (4) et dans son extension principale le long de l'axe pivotant (4) et un élément de raccordement coudé (5) constitué d'une partie principalement verticale (5b) et d'une partie principalement horizontale (5a), qui sont reliées l'une à l'autre de manière rigide, positionné entre le dispositif pivotant (2) et le dispositif rotatif (1), et une pointe deb brûleur ou un TCP (6) de l'outil générateur de faisceau (3) présente une distance normale à l'axe pivot (4) qui est plus grande que l'extension du boîtier (8) dans un plan perpendiculaire à l'axe pivot (4), **caractérisé en ce que** la partie horizontale de l'élément de raccordement (5a) est formée par l'élément de raccordement coudé (5) en sorte que sa distance à l'axe pivot (4) soit plus grande que celle entre le TCP (6) et l'axe pivot (4) et que la zone de mouvement de l'outil générateur de faisceau (3) autour de l'axe pivot (4) atteigne plus de 180 degrés, dans lequel il est prévu sur l'arbre de l'axe pivot (4) et avec le support de brûleur (21) un dispositif mécanique générateur d'un couple de torsion solidement fixé (7), qui exerce un couple de torsion approximativement constant opérant dans une direction sur l'arbre de l'axe pivot (4), qui est sensiblement plus grand que celui qui peut être imputé par des forces technologiques éventuelles ou des forces massiques de l'outil générateur de faisceau (3) sur cet arbre et le boîtier (8) est également entouré par un dispositif de protection en forme de cage (9), qui se trouve à une certaine distance du boîtier (8) sur la partie inférieure et sur les parois latérales qui est plus grande que la course de freinage d'arrêt d'urgence de la machine en forme de portique semblable à un robot, le dispositif de protection en forme de cage (9) est relié avec le boîtier (8) sur la partie supérieure du boîtier au moyen d'au moins un aimant permanent (10) et maintient pressé, avec des talons de fermeture effilés (11), au moins un tourillon de commutation (12) ressortant du boîtier (8), lequel tourillon ferme pour sa part un dispositif de commutation incorporé au circuit d'arrêt d'urgence.

2. Dispositif porte-outil à commande numérique selon la revendication 2, **caractérisé en ce que** le dispositif mécanique (7) générateur d'un couple de torsion se présente sous la forme d'un moteur pneumatique à rotor ou d'un ressort de torsion ou d'un ressort spiral.

3. Dispositif porte-outil à commande numérique selon la revendication 1, **caractérisé en ce que** le boîtier (8) et l'élément de raccordement coudé (5) comprennent tous des composants nécessaires pour la commande numérique du dispositif de pivotement (2) et la partie inférieure et les parois latérales du boîtier (8) sont constitués d'un matériau qui résiste à l'adhérence d'éclats de scories chauds et possède une surface réfléchissant fortement le rayonnement thermique.

4. Dispositif porte-outil à commande numérique selon la revendication 1, **caractérisé en ce que** le boitier (8) lui-même et les composants qui s'y trouvent sont refroidis par un gaz qui peut être guidé sous pression élevée dans le boîtier (8) via un tube d'acheminement (13) ainsi qu'orienté le long d'une voie définie.

5. Dispositif porte-outil à commande numérique selon la revendication 1, avec un système de mesure (14) opérant en mode incrémental à l'intérieur du boîtier (8), **caractérisé en ce que** le système de mesure (14) est bridé sur l'arbre d'un moteur de pivotement (15) et, pour son référencement, un talon de commutation (17) est respectivement fixé à l'arbre menant et à l'arbre mené d'un mécanisme de pivotement (16), les talons de commutation (17) opérant respectivement sur un moyen de commutation (18) agissant comme contact de rupture, dans lequel ces derniers sont commutés en parallèle.

6. Dispositif porte-outil à commande numérique selon la revendication 1, **caractérisé en ce que**, pour le référencement du dispositif rotatif (1), respectivement un talon de commutation est fixé à l'arbre menant et à l'arbre mené de son mécanisme de démultiplication, ceux-ci agissant respectivement sur un moyen de commutation opérant comme contact de rupture et les deux moyens de commutation étant commutés en parallèle.

7. Dispositif porte-outil à commande numérique selon la revendication 1, **caractérisé en ce que** l'outil générateur de faisceau (3) est coudé de sorte que la partie non coudée de l'outil générateur de faisceau (3) se situe en position de base parallèlement à l'axe du dispositif rotatif (1) et que l'axe de sa partie coudée déplacée dans le TCP (6) de l'outil générateur de faisceau (3) coupe l'axe pivot (4).
